# EUROPEAN PATENT APPLICATION

(11) **EP 3 279 474 A1**
(43) Date of publication of application: **07.02.2018**
(21) Application number: 17175944.2
(22) Date of filing: 14.06.2017
(51) Int. Cl.: F04B 35/06, F04B 49/24, F04B 49/08, G01L 7/16

(54) **COMPRESSOR UNIT**

(30) Priority: 03.08.2016 JP 2016153076
(71) Applicant: Sumitomo Rubber Industries, Ltd., Kobe-shi, Hyogo-ken (JP)
(72) Inventor: Kono, Tsutomu, Kobe-shi, Hyogo-ken, 651-0072 (JP)
(74) Representative: Manitz Finsterwald Patentanwälte PartmbB

(57) **Abstract**

A compressor unit (1) comprises a compressor (5) and a pressure meter (6). The pressure meter (6) comprises: a tubular body (18) communicating with the surge chamber (12B), a meter-piston (19) movable in the tubular body (18) in the longitudinal direction thereof by the compressed air, and a spring (20) biasing the piston 18 toward the front end. The tubular body (18) comprises a small diameter portion (18F) in which a seal ring (25) of the piston airtightly contacts with the tubular body, and a large diameter portion (18R) in which a gap (D) is formed between the seal ring and the tubular body. The large diameter portion is connected to the small diameter portion via a step (K) at which the insider diameter of the tubular body (18) is abruptly changed, whereby when the compressed air reaches to a specified pressure and the seal ring of the piston is moved beyond the step (K), the compressed air is discharged through the gap (D).

## Description

### Technical field

The present invention relates to a compressor unit suitable for a tire puncture repair kit.

### Background art

Japanese Patent Application Publication No.2015-157458 (Patent Document 1) discloses a tire puncture repair kit comprising a compressor and a pressure meter. The pressure meter has the function of a relief valve, and can control the pressure of compressed air supplied from the compressor to a pneumatic tire. Thus, it is not necessary to employ a relief valve, and the tire puncture repair kit can be reduced in the size and production cost.

The pressure meter disclosed in Patent Document 1 comprises a tubular body communicating with a surge chamber of the compressor, a piston disposed in the tubular body movably by the compressed air from the surge chamber, a spring for biasing the piston toward the front end of the tubular body, and an indicator for the displacement of the piston. The peripheral wall of the tubular body is provided with an exhaust hole. When the compressed air is increased and reaches to a specified pressure, an O-ring of the piston is moved beyond the exhaust hole to discharge the compressed air, thereby, overpressure is released from the exhaust hole.

In such pressure meter, the opening area of the exhaust hole is small, and the exhaust hole is gradually opened as the 0-ring is passing over the exhaust hole. Thus, it is difficult to release the overpressure instantaneously when the compressed air reaches to the specified pressure. Therefore, there is room for improvement in the functions as of a relief valve such as quick response capability and pressure control accuracy.

### Summary of the invention

It is therefore, an object of the present invention to provide a compressor unit comprising a pressure meter which is capable of controlling the pressure of compressed air supplied to an object to be supplied with the compressed air without using a relief valve, and which is improved in the quick response capability and pressure control accuracy.

According to the present invention, a compressor unit comprises:
a compressor comprising a cylinder comprising a pump chamber portion for compressing air, and a surge chamber portion communicating with the pump chamber portion to receive the compressed air from the pump chamber portion, and
a pressure meter for measuring the pressure of the compressed air in the surge chamber,
wherein
the pressure meter comprises
a tubular body having a front end which is provided with a through hole communicating with the surge chamber, and a rear end to which a cap is attached, and
a meter-piston provided with a seal ring, and disposed in the tubular body movably in the longitudinal direction thereof by the compressed air from the through hole, and
a spring disposed in the tubular body between the piston and the cap, and biasing the piston toward the front end of the tubular body so that the meter-piston can be moved according to the change in the pressure of the compressed air, and an indicator for the displacement of the meter-piston, and
the tubular body comprises
a small diameter portion in which the seal ring of the meter-piston contacts with the inner circumferential surface thereof so that the seal ring seals between the inner circumferential surface and the piston, and
a large diameter portion which has an inside diameter larger than that of the small diameter portion so that a gap is formed between the inner circumferential surface thereof and the seal ring, and which is connected to the small diameter portion via a step at which the insider diameter of the tubular body is changed,
whereby when the compressed air reaches to a specified pressure and the seal ring of the piston is moved from the small diameter portion to the large diameter portion beyond the step, the compressed air is discharged through the gap.

In the compressor unit according to the present invention, it is preferable that the indicator is attached to the tubular body, and
the indicator comprises a scale panel which is marked with a scale for showing the displacement of the piston, and located in an upper surface of the compressor unit.

In the compressor unit according to the present invention, it is preferable that the indicator comprises a pointer plate which is provided with a pointer for pointing the scale of the scale panel, and disposed along the lower surface of the scale panel, and
the pointer plate is fixed to the piston via a connecting portion protruding from the outer circumferential surface of the piston so that the pointer plate is moved together with the piston.

In the compressor unit according to the present invention, it is preferable that the large diameter portion is provided with a slot which extends in the longitudinal direction of the tubular body, and penetrates through the peripheral wall of the large diameter portion, and
the connecting portion which connects between the pointer plate and the piston, passes through the slot.

In the compressor unit according to the present invention, it is preferable that the scale panel is provided with a guide for guiding the pointer plate in the longitudinal direction of the tubular body.

Therefore, in the compressor unit according to the present invention, the gap is formed over the entire circumference of the piston to ensure a large opening area. Moreover, when the seal ring is moved beyond the step, the gap having the large opening area is instantly formed, and the overpressure is instantaneously released. Therefore, it is possible to improve the quick response capability and pressure control accuracy.

### Brief description of the drawings

Fig. 1 is a plan view of a compressor unit as an embodiment of the present invention.
Fig. 2 is a plan view showing the internal configuration of the compressor unit.
Fig. 3 is a perspective view of the pressure meter of the compressor unit.
Fig. 4 is a cross-sectional side view of the pressure meter.

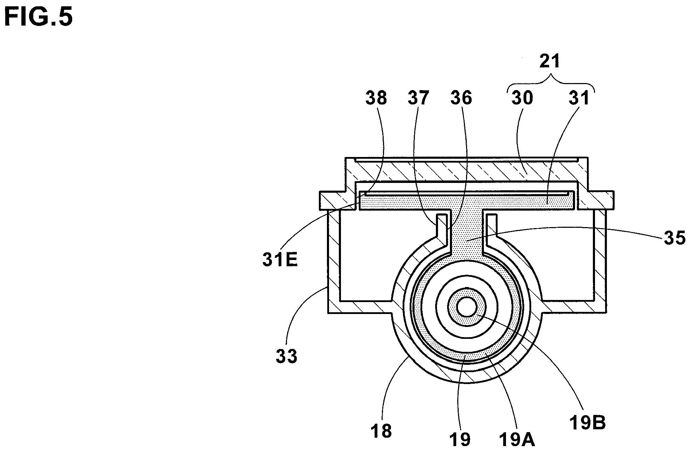

Fig. 5 is a cross-sectional view taken along line A-A of Fig. 4.

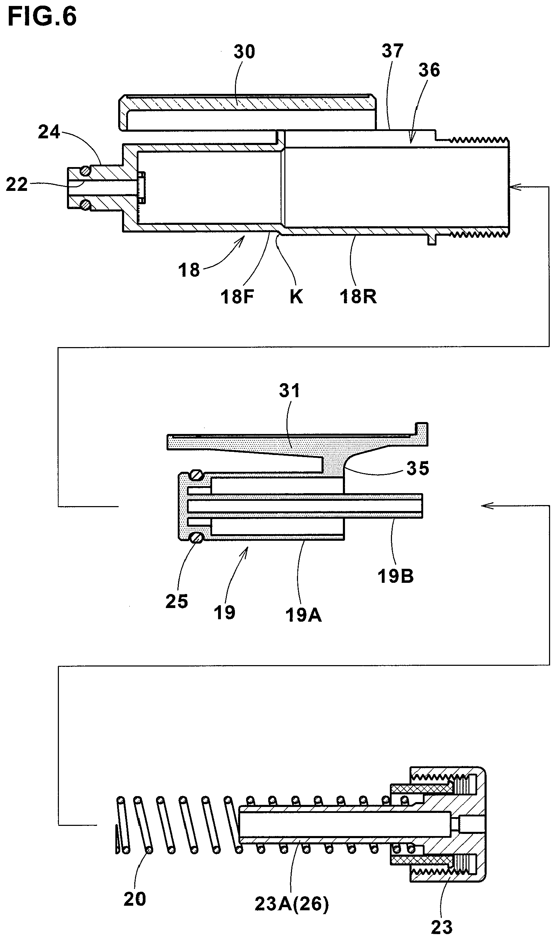

Fig. 6 is an exploded cross-sectional side view of the pressure meter.
Fig. 7 is an enlarged cross-sectional view showing the gap between the seal ring and the inner circumferential surface of the large diameter portion of the tubular body.

### Description of the Preferred Embodiments

Embodiments of the present invention will now be described in detail in conjunction with accompanying drawings.

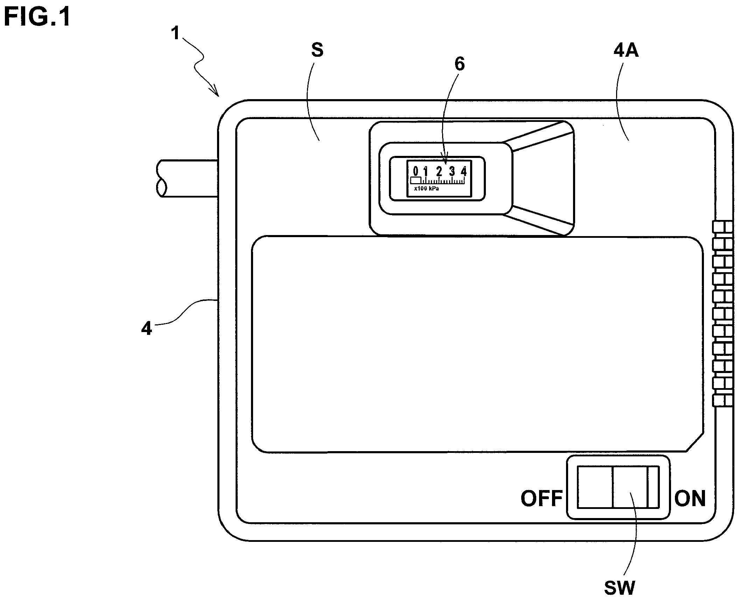

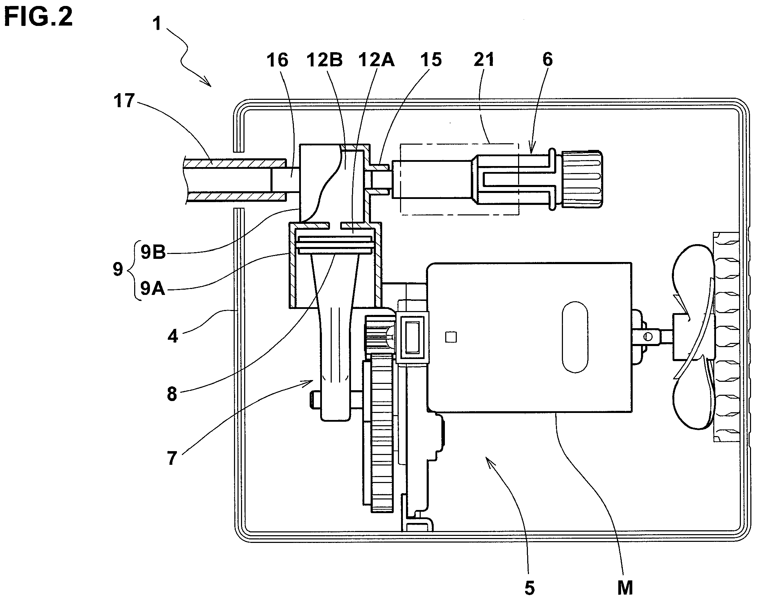

As shown in Figs. 1 and 2, a compressor unit 1 according to the present invention comprises a housing case 4, a compressor 5 for generating compressed air disposed in the housing case 4, and a pressure meter 6 for measuring the pressure of the compressed air disposed in the housing case 4.

The compressor 5 comprises a cylinder 9, a piston 8 disposed in the cylinder 9, and a motor M connected to the piston 8 via a crank mechanism 7 to reciprocate the piston 8 in the cylinder 9.

The motor M is a DC motor which can be operated by a 12v DC power supply of the car. The power cord of the motor M is connected to a power plug which can be connected to a cigarette lighter socket of the car, and between the motor M and the power plug, the power cord is provided with a power switch SW attached to a top plate portion 4A of the housing case 4.

The cylinder 9 comprises a pump chamber portion 9A and a surge chamber portion 9B.

In the pump chamber portion 9A, the piston 8 is disposed so that the piston can reciprocate. The pump chamber portion 9A forms a pump chamber 12A for compressing the air together with the piston 8.

The surge chamber portion 9B communicates with the pump chamber portion 9A via a one-way valve (not shown), and forms a surge chamber 12B for receiving the air compressed in the pump chamber portion. The surge chamber 12B stabilizes the pulsative pressure of the compressed air supplied from the pump chamber 12A.

The surge chamber portion 9B is provided with two tubular coupling portions 15 and 16 which project therefrom. The pressure meter 6 is connected to the tubular coupling portion 15.
A hose 17 to be connected to an object to be supplied with the compressed air (for example, a pneumatic tire, a puncture repair kit, etc.) is connected to the connection tubular part 16.

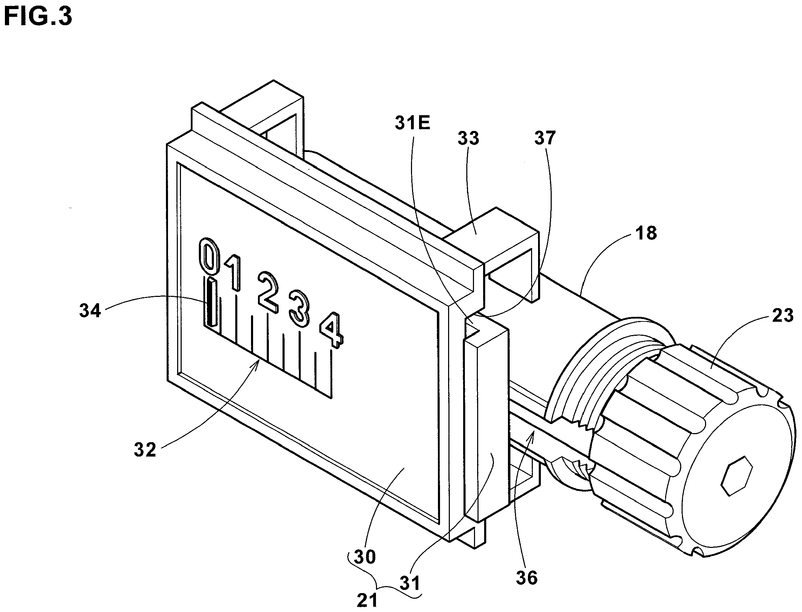

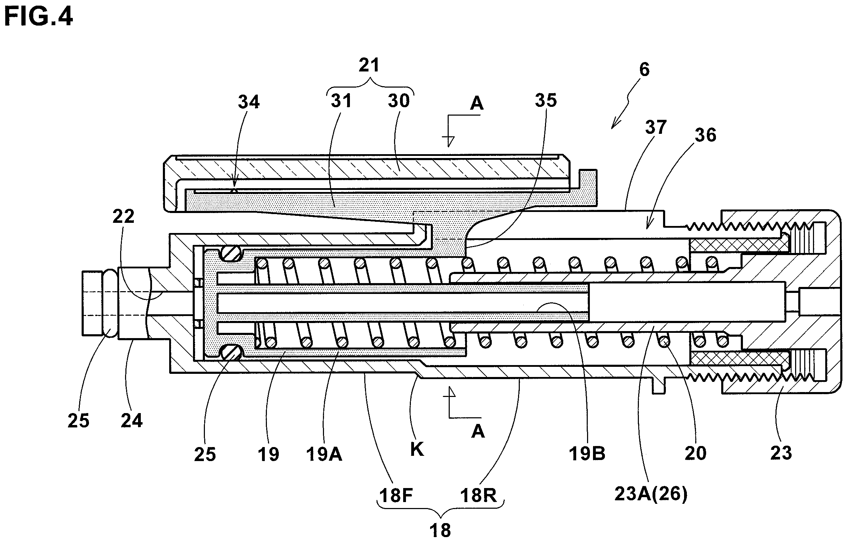

As shown in Figs. 3 and 4, the pressure meter 6 comprises a tubular body 18, a meter-piston 19, a spring 20 and an indicator 21.

The tubular body 18 has a front end provided with a through hole 22 communicating with the surge chamber 12B, and a rear end to which a cap 23 is attached to close the opening. More specifically, a tubular connector portion 24 having a small diameter is concentrically and continuously formed at the front end of the tubular body 18 having a larger diameter, and a center bore of the connector portion 24 forms the through hole 22. The connector portion 24 is connected to the above-mentioned tubular coupling portion 15 airtightly owing to a seal ring 24A such as an 0-ring attached to the outer circumferential surface of the connector portion 24.

The tubular body 18 is composed of a small diameter portion 18F formed on the front end side and having a smaller inside diameter, and a large diameter portion 18R on the rear end side having a larger inside diameter and connected to the small diameter portion 18F via a step K at which the inside diameter of the tubular body 18 is abruptly changed. A cap 23 is screwed to a threaded rear end part of the large diameter portion 18R.

The meter-piston 19 comprises
a cylindrical piston main body 19A loosely inserted into the tubular body 18 and for example, made of a synthetic resin, and a seal ring 25 such as an 0-ring attached to the outer circumferential surface of the piston main body 19A.

The seal ring 25 can closely contact with the inner circumferential surface of the small diameter portion 18F to seal between the inner circumferential surface and the piston main body 19A. Thus, by the compressed air supplied through the through hole 22, the meter-piston 19 is moved in the tubular body 18 in the longitudinal direction thereof.

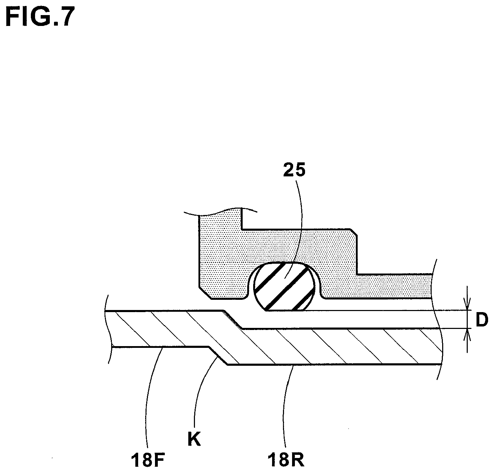

when the seal ring 25 is moved to the large diameter portion 18R together with the piston main body 19A, as shown in Fig. 7, a gap D is formed between the large diameter portion 18R and the seal ring 25. Accordingly, when the compressed air reaches to a specified pressure, and the seal ring 25 is moved beyond the step K, the compressed air is discharged through the gap D.

Since the gap D is formed over the entire circumference of the piston, it is possible to secure a large opening area as compared with the exhaust hole of the Patent Document 1. Therefore, the overpressure can be released instantaneously, and it is possible to improve the quick response capability and pressure control accuracy.

The spring 20 is disposed between the meter-piston 19 and the cap 23 in order to bias the meter-piston 19 toward the front end. The spring 20 in this example is a compression coil spring, and the displacement (in this example, the amount of compression) of the spring 20 varies according to the magnitude of the pressure of the compressed air.

The cap 23 in this example is provided with a tubular holding portion 23A. The tubular holding portion 23A protrudes toward the inside of the tubular body 18 and is inserted into the coil spring 20 to concentrically hold the spring 20.
The tubular holding portion 23A also functions as a guide 26 for guiding the meter-piston 19 concentrically.
More specifically, the meter-piston 19 in this example is provided with a guide shaft 19B disposed radially inside the piston main body 19A concentrically, and
the guide shaft 19B is slidably inserted into the center bore of the tubular holding portion 23A. Thereby, the movement of the meter-piston 19 in the longitudinal direction of the tubular body is guided.

The indicator 21 indicates the displacement of the meter-piston 19.
The indicator 21 in this example comprises a scale panel 30 appearing in the upper surface S of the compressor unit 1, and a pointer plate 31 disposed along the lower surface of the scale panel 30.

The scale panel 30 is a plate made of a synthetic resin or the like.
The outer or inner surface of the scale panel 30 is marked with a scale 32 for showing the displacement of the meter-piston 19 by using an appropriate technique, e.g. printing, engraving, molding and the like.
The scale panel 30 is attached to the tubular body 18 through leg portions 33.
In this example, the scale panel 30, the leg portions 33 and the tubular body 18 are integrally molded.

The pointer plate 31 is a plate made of a synthetic resin or the like. The pointer plate 31 is disposed along the lower surface of the scale panel 30. The upper or outer surface of the pointer plate 31 is marked with a pointer 34 for pointing the scale 32 by using an appropriate technique, e.g. printing, engraving, molding and the like. The pointer plate 31 is fixed to the meter-piston 19 through a connecting portion 35 so that the pointer plate 31 is moved together with the meter-piston 19. The connecting portion 35 projects from the outer circumferential surface of the meter-piston 19 (piston main body 19A).
In this example, the pointer plate 31, the connecting portion 35 and the meter-piston 19 is integrally molded.

The scale panel 30 is transparent at least in a portion in which the scale 32 is marked so that the pointer 34 is visible through the transparent portion. Thus, the pointer 34 indicates the displacement of the meter-piston 19, i.e. the pressure of the compressed air.

The scale panel 30 in this example is provided with a guide portion 38 for guiding the pointer plate 31 in the longitudinal direction.
The guide portion 38 is formed by a pair of ribs which protrude from the lower surface of the scale panel 30 and extend in the longitudinal direction along the side edges 31E of the pointer plate 31.

The above-mentioned large diameter portion 18R in this example is provided with a slot 36 which penetrates through the peripheral wall of the large diameter portion, and extends in the longitudinal direction of the tubular body 18. The large diameter portion 18R is provided with reinforcing ribs 37 which extend along the respective edges of the slot 36 and protrude from the outer circumferential surface of the large diameter portion 18R by a small height.

The above-mentioned connecting portion 35 which extends from the meter-piston 19, passes through the slot 36 and is united with the pointer plate 31 at the upper end. Thus, when the compressed air reaches to a specified pressure, the compressed air flowing out through the gap D is discharged toward the outside of the pressure meter 6 through the slot 36.

Such indicator 21 can increase the display size of the scale and the pointer in order to improve the visibility.

while detailed description has been made of a preferable embodiment of the present invention, the present invention can be embodied in various forms without being limited to the illustrated embodiment.

### Description of the reference signs

- 1: compressor unit
- 5: compressor
- 6: pressure meter
- 9: cylinder
- 9A: pump chamber portion
- 9B: surge chamber portion
- 12A: pump chamber
- 12B: surge chamber
- 18: tubular body
- 18F: small diameter portion
- 18R: large diameter portion
- 19: meter-piston
- 20: spring
- 21: indicator
- 22: through hole
- 23A: tubular holding portion
- 23: cap
- 25: sealing ring
- 30: scale panel
- 31: pointer plate
- 32: scale
- 34: pointer
- 35: connecting portion
- 36: slot
- 38: guide portion
- D: gap
- K: step

## Claims

1. A compressor unit comprising:
a compressor comprising a cylinder comprising a pump chamber portion for compressing air and a surge chamber portion communicating with the pump chamber portion to receive the compressed air from the pump chamber, and
a pressure meter for measuring the pressure of the compressed air in the surge chamber,
wherein
the pressure meter comprises
a tubular body having a front end which is provided with a through hole communicating with the surge chamber, and a rear end to which a cap is attached, and
a meter-piston provided with a seal ring and disposed in the tubular body movably in the longitudinal direction thereof by the compressed air from the through hole, and
a spring disposed in the tubular body between the piston and the cap and biasing the piston toward the front end of the tubular body so that the meter-piston can be moved according to the change in the pressure of the compressed air, and
an indicator for the displacement of the meter-piston, and
the tubular body comprises
a small diameter portion in which the seal ring of the meter-piston contacts with the inner circumferential surface thereof so that the seal ring seals between the inner circumferential surface and the piston, and
a large diameter portion which has an inside diameter larger than that of the small diameter portion so that a gap is formed between the inner circumferential surface thereof and the seal ring, and which is connected to the small diameter portion via a step at which the insider diameter of the tubular body is changed,
whereby when the compressed air reaches to a specified pressure and the seal ring of the piston is moved from the small diameter portion to the large diameter portion beyond the step, the compressed air is discharged through the gap.

2. The compressor unit according to claim 1, wherein
the indicator is attached to the tubular body, and
the indicator comprises a scale panel which is marked with a scale for showing the displacement of the piston, and located in an upper surface of the compressor unit.

3. The compressor unit according to claim 2, wherein
the indicator comprises a pointer plate which is provided with a pointer for pointing the scale of the scale panel, and disposed along the lower surface of the scale panel, and
the pointer plate is fixed to the piston via a connecting portion protruding from the outer circumferential surface of the piston so that the pointer plate is moved together with the piston.

4. The compressor unit according to claim 3, wherein
the large diameter portion is provided with a slot which extends in the longitudinal direction of the tubular body, and penetrates through the peripheral wall of the large diameter portion, and
said connecting portion which connects between the pointer plate and the piston, passes through the slot.

5. The compressor unit according to claim 3 or 4, wherein the scale panel is provided with a guide for guiding the pointer plate in the longitudinal direction of the tubular body.
